# EUROPEAN PATENT APPLICATION

(11) **EP 4 439 365 A1**
(43) Date of publication of application: **02.10.2024**
(21) Application number: 23275052.1
(22) Date of filing: 31.03.2023
(51) Int. Cl.: G06F 21/72, G06F 21/76, G06F 21/86, G06F 21/87, G06F 21/57

(54) **A CRYPTOGRAPHIC DEVICE**

(71) Applicant: nCipher Security Limited, Cambridge CB1 2GA (GB)
(72) Inventor: CARTER, Jonathan Richard Edward, Cambridge (GB); BAKER, Kevin John, Cambridge (GB)
(74) Representative: Marks & Clerk LLP

(57) **Abstract**

A Hardware Security Module is proposed comprising a tamper detection component, a random access memory component, a non-volatile memory component, at least one processor communicatively coupled to the random access memory component, the tamper detection component, and the non-volatile storage component; and a tamper resistant means encapsulating at least the tamper detection component. Only a subset of the components of an HSM are encapsulated in an encapsulation layer. In this way, the manufacturing of the HSM is made simpler, and the testing, debugging, replacement or repair of the components outside the encapsulation layer is made easier.

## Description

### Field

The present invention relates to a cryptographic device.

### Background

A Hardware Security Module (HSM) is a device that securely stores and manages cryptographic keys, and performs a set of cryptographic algorithms.

A HSM may comprise a plurality of hardware components on a Printed Circuit Board (PCB). Due to the sensitive information stored and processed by the HSM (e.g. cryptographic keys), Hardware Security Modules may comprise physical mechanisms that provide security, for example that protect against tampering by a malicious third party.

For example, a tamper resistant mechanism can be provided. An example of a tamper resistant mechanism is an epoxy resin coating that covers all of the hardware components and interconnections between the hardware components on the Printed Circuit Board, deterring physical access to the components and interconnections. This coating encapsulates the individual hardware components that make up the HSM and makes it more difficult for a malicious third party to compromise the security of the Hardware Security Module (HSM). In particular, a physical attack on the hardware components is likely to result in destruction of the components and or tracking on the Printed Circuit Board.

However, encapsulating the Printed Circuit Board (PCB) in this manner can impact the reliability of the HSM. For example, encapsulating the Printed Circuit Board (PCB) in this way makes it difficult for a legitimate party to test, debug, replace or repair the hardware components on the Printed Circuit Board (PCB). Furthermore, encapsulating the PCB makes manufacturing it more specialist and expensive, and makes thermal management of the components more difficult.

### Summary of the invention

In general terms, the present disclosure proposes that only a subset of the components of an HSM are encapsulated in an encapsulation layer. The communication of data to components outside the encapsulation layer can be performed in a secure manner so that the security of the system is not compromised by an attack on the components outside the encapsulation layer. In this way, the manufacturing of the HSM is made simpler, and the testing, debugging, replacement or repair of the components outside the encapsulation layer is made easier.

### Brief Description of the Figures

Devices and methods in accordance with non-limiting embodiments will now be described with reference to the accompanying figures in which:
Figs. 1A and 1B show, respectively in schematic top-plan view and cross-sectional view, a first example of a HSM;
Figs. 2A and 2B show, respectively in schematic top-plan view and cross-sectional view, a second example of a HSM;
Figs. 3A and 3B show, respectively in schematic top-plan view and cross-sectional view, a third example of a HSM;
Fig. 4 shows a Field Programmable Gate Array suitable for use in the third example of a HSM;
Fig. 5 shows schematically the structure of a processing system for use in the first and second examples of HSMs;
Fig. 6 illustrates the operation of the processing system of Fig. 5;
Fig. 7 shows in schematic top-plan view a fourth example of an HSM;
Figs. 8A and 8B show, respectively in schematic top plan view and cross-sectional view, an HSM which is an embodiment of the invention, and Fig. 8C shows a booting operation of the HSM performed by the embodiment;
Figs. 9A and 9B show, respectively in schematic top-plan view and cross-sectional view, an HSM which is a second embodiment of the invention;
Figs. 10A and 10B show, respectively in schematic top-plan view and cross-sectional view, an HSM which is a third embodiment of the invention;
Figs. 11A and 11B show, respectively in schematic top-plan view and cross-sectional view, an HSM which is a fourth embodiment of the invention; and
Fig. 12 shows the steps of a method for manufacturing an HSM according to any of the first to fourth embodiments.

Throughout the figures, the same reference numerals are used to refer to the same components or functionality. Features of a component described with reference to one example or embodiment are to be understood as applicable to all examples or embodiments including that component.

### Detailed Description

A Hardware Security Module (HSM) is a device that securely stores and manages cryptographic keys, and performs a set of cryptographic algorithms. Example cryptographic operations include, but are not limited to: generating a cryptographic key, securely storing a cryptographic key, and using cryptographic keys, for example for performing encryption or digital signature functions.

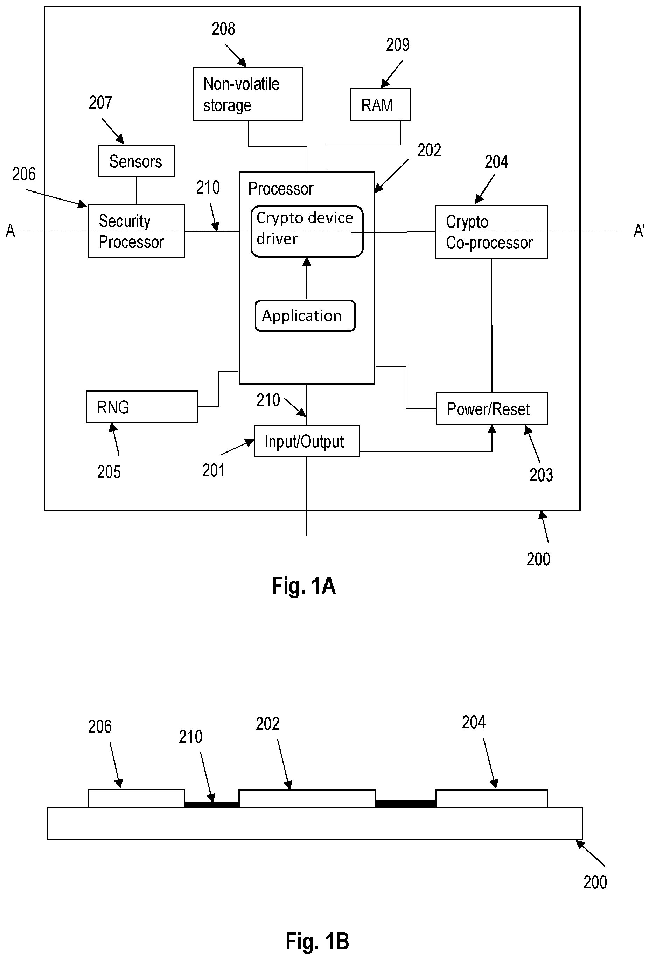

Fig. 1A is a schematic illustration showing a plan view of a Hardware Security Module (HSM) device according to an example. Fig. 1A shows a Hardware Security Module (HSM) comprising a plurality of discrete interconnected hardware components. Each of the components (discussed in more detail below) are located on a surface of a Printed Circuit Board (PCB) 200. The components may all be provided on the same surface of the PCB (as illustrated), although in principle different ones of the components may be on different ones of the surfaces. The PCB 200 comprises electrically conductive connections 210, also known as traces, for communicatively coupling the components to each other. The electrically conductive connections 210 may be provided on either or both major surfaces of the PCB, and/or within the structure, with electrical conductive connections transverse to the major surfaces of the PCB being provided by vias.

The Hardware Security Module (HSM) comprises an Input/Output (IO) connector 201. The IO connector 201 is communicatively coupled to a "main" processor 202 located on the PCB 200 and is configured to act as an interface, through which data is communicated, between the processor 202 and an external system. The Hardware Security Module (HSM) is configured to be communicatively coupled to a computer or server device in an external system through the Input/Output (IO) connector 201. For example, the Hardware Security Module (HSM) can be a PCI express card (PCIe), which can be directly plugged into the computer or server device. In this case the Input/Output (IO) connector may be a PCIe connector. In use, the Hardware Security Module (HSM) receives user requests through the Input-Output (IO) connector 201. The requests may comprise commands to perform certain cryptographic operations.

The Input-Output (IO) connector 201 is communicatively coupled to the processor 202 by one of the electrically conductive connections 210. The processor 202 is a Central Processing Unit (CPU) and is configured to perform basic arithmetic, logic, controlling, and Input/Output (I/O) operations specified by instructions in computer program code. An example of the processor 202 is an NXP T1042 processor. The internal structure of the processor 202 is fixed, that is to say that the internal circuitry of the processor utilised to perform the various operations is fixed and cannot be changed after the processor 202 is manufactured. In other words, the internal structure, i.e. the hardware, of the processor 202 is not configurable.

The Hardware Security Module (HSM) further comprises non-volatile memory 208 and volatile working memory comprising Random Access Memory (RAM) 209. The non-volatile memory 208 may include any form of non-volatile device memory. In an example, the non-volatile memory 208 includes Flash memory and Electrically Erasable Read Only Memory (EEROM). The RAM 209 may be DDR RAM. The processor 202 is in wired bidirectional communication with both the non-volatile storage 208 and the Random Access Memory (RAM) 209.

Computer program code is stored in the non-volatile memory 208. When executed, a program is represented as a software product, or process, in the working memory. The processor 202 comprises logic circuitry that responds to and processes instructions in program code present in the working memory. The below description refers to an "application", which is program code comprising a set of computer instructions. The application comprises machine code stored in the non-volatile memory 208 on the HSM. Also stored in the non-volatile memory 208 on the HSM are any components necessary to execute the application, including runtime system files. When executed, a copy of the application machine code is loaded in the working memory. An "application process" is the instance of the application that is being executed, comprising the machine code in the working memory. Optionally, at least part of the non-volatile memory 208 may be provided in the form of a smart card, which is coupled to the processor 202 by a smart card reader (not shown) mounted on the PCB. In this case, the non-volatile memory 208 may comprise the combination of the smart card reader and the smart card.

The application comprises computer instructions embodying a set of one or more cryptographic algorithms. For example, the application comprises computer instructions embodying one or more of the following cryptographic algorithms: cryptographic key generation; key derivation; encryption; decryption; and digital signature algorithms (for example digital signing or validation of a digital signature). The application can be embedded in the non-volatile memory 208 of the Hardware Security Module when the Hardware Security Module (HSM) is manufactured by a trusted party, or can be provided by the trusted party as a whole or in part after manufacture. For instance, the application can be introduced by the trusted party as a computer program product, which may be in the form of a download. Alternatively, modifications to an existing application can be made by the trusted party by an update or plug-in. Execution of the application by the processor 202 causes various functionality of a Hardware Security Module (HSM), such as generating cryptographic keys, storing cryptographic keys, or performing cryptographic operations etc., to be implemented.

The processor 202 runs a board support package. This may simply be a "bare metal" system, but alternatively the processor 202 may optionally run an operating system, for example a Linux operating system. The board support package or operating system comprises system software that manages the hardware and software resources of the HSM device, and acts as an intermediary between the application and the HSM hardware.

One or more cryptographic application keys are associated with the client for use with the cryptographic algorithms embodied in the application. The application key(s) may be securely stored outside of the HSM device, encrypted using a master key. The master key is also available to the processor 202, e.g. stored within the non-volatile storage 208 and/or within a security processor (SP) 206 (described more fully below). For example, the application key(s) may be encrypted using AES (Advanced Encryption Standard) encryption (for example) using the master key. The encrypted application key(s) can then be transmitted to a separate external device for storage. In use, encrypted application keys may be sent to the HSM, which decrypts them using the master key, and then uses the application keys to perform the cryptographic algorithms.

An example, in which material used to derive the master key is stored between the main processor 202 and the security processor 206, will now be described. In this example, the master key is derived from two keys, referred to as MK1 and MK2 using a key derivation function. The master key is derived on the processor 202 when needed to decrypt data, from MK1 and MK2.

MK2 is stored on the security processor 206 in encrypted form, and decrypted and provided to the processor 202 when requested. It is stored on the security processor 206 encrypted with a key, which may be an AES 256 bit key, referred to as SP-SEK (Security processor storage encryption key). The storage encryption key SP-SEK is used by the security processor 206 to protect sensitive data. Sensitive data, including MK2, is stored on the security processor 206 encrypted with SP-SEK. The SP-SEK is generated from a hardware random number generation component on the security processor 206. If a tamper is detected at the security processor 206, it immediately performs a hardware erasure of the SP-SEK.

MK1 is stored on the processor 202 in an encrypted form. The processor 202 stores a key, which may be a 256 bit AES key, referred to as MP-SEK (Main processor storage encryption key). The storage encryption key MP-SEK is used by the processor 202 to protect sensitive data. Sensitive data, including MK1, is stored on the processor 202 encrypted with MP-SEK. The MP-SEK is generated from a hardware random number generation component on the processor 202. If a tamper is detected at the main processor 202, it immediately performs a hardware erasure of the MP-SEK.

The MK1 and MK2 keys are used to derive the master key, which is used to encrypt the user data, such as the application keys for storage elsewhere. The master key is derived using a key derivation function taking MK1 and MK2 as input. Once the user data has been encrypted, the master key is deleted. To decrypt the user data, the master key is re-derived at the processor 202. This involves the security processor 206 decrypting MK2, and sending it to the processor 202, then decrypting MK1 at the processor 202. If a tamper is detected at the security processor 206, erasure of SP-SEK from the security processor 206 prevents the SP-SEK key from being used. This in turn prevents MK2 from being decrypted, and so prevents the master key from being derived. Similarly, erasure of the MP-SEK key at the processor 202 in response to a tamper event prevents MP-SEK from being used, and thus prevents MK1 from being decrypted, which in turn stops the master key from being derived.

The HSM device further comprises a crypto co-processor 204. The crypto co-processor 204 performs various cryptographic functions in hardware in order to accelerate the cryptographic operation, for example various standard encryption and decryption algorithms, and digital signature algorithms. For example, the crypto co-processor 204 is configured to be able to provide math acceleration to support cryptographic operations. The crypto co-processor 204 comprises an application-specific integrated circuit (ASIC). The ASIC comprises fixed logic circuitry configured to perform the standard operations. In other words, in the crypto co-processor 204, one or more operations are implemented directly in hardware (programmable logic, rather than software). Examples of such devices include the NXP C291 Crypto Coprocessor, the NXP C292 Crypto Coprocessor, and the MaxLinear 9240 Data Compression and Security Coprocessor. In an example the crypto co-processor 204 is implemented in a self-contained package, optionally as a Flip Chip-Plastic Ball Grid Array (FC-PBGA).

The crypto co-processor 204 is configured to receive requests to perform one or more operations from the CPU 202 and to return to the CPU 202 the output of the operation. The CPU 202 is configured to off-load various operations to the crypto co-processor 204. The crypto co-processor 204 is separate to the CPU 202, and configured to perform certain operations in hardware, meaning that these operations may be performed more efficiently on the crypto co-processor 204 than on the CPU 202. Operations may be performed on the crypto co-processor 204 concurrently with operations performed on the CPU 202.

In the device shown in Fig. 1A, the CPU 202 runs the application, which calls a module "Crypto device driver", which provides access to kernel cryptographic drivers, allowing the application to take advantage of the crypto co-processor 204. The crypto co-processor 204 has fixed implementations, in other words hardware implementations, of one or more cryptographic operations. The RAM 209 keeps working data, including keys, used in these operations.

The Hardware Security Module (HSM) further comprises a Power/Reset component 203 configured to provide power to all of the active components on the Printed circuit board 200 including the processor 202 and the crypto co-processor 204. The Power/Reset component 203 may for example be coupled to the Input/Output connector 201 such that power can be provided to all active components on the PCB 200 including the processor 202 and the crypto co-processor 204 via the Input/Output connector 201. For example, the connection may be made via a PCIe (Peripheral Component Interconnect Express) line.

The Hardware Security Module (HSM) further includes a random number generator (RNG) component 205 mounted on the PCB. The Hardware Security Module may also include a power source (battery unit; not shown) mounted on the PCB.

As mentioned above, the Hardware Security Module (HSM) further comprises a security processor 206. The security processor 206 is configured to communicate with a plurality of on-board sensors 207. The sensors 207 are configured to monitor physical/environmental properties that may indicate an attack on the HSM. The sensors may include but are not limited to processor and/or board temperature sensors, or voltage and/or current sensors. The security processor 206 is configured to determine when the Hardware Security Module (HSM) is being tampered with. For example, the security processor 206 may be configured to detect a cold boot attack based on readings obtained from the temperature sensors. Furthermore, the security processor 206 may be configured to detect a glitch attack based on readings from the voltage and/or current sensors. Optionally, the Hardware Security Module (HSM) is enclosed within a container that has an access cover. In this case the sensors 207 may include a tamper detection switch, and the security processor 206 is configured to determine when the cover is removed based on the state of the tamper detection switches. Optionally, the sensors 207 may also be used for monitoring the state of the HSM, for example for detecting if one of the components, such as the CPU 202, is overheating.

In use, the security processor 206 is configured to communicate with the processor 202. The security processor 206 provides information indicating whether or not the security of the Hardware Security Module (HSM) has been compromised.

In an example, the processor 202 is configured to determine, during initialisation of the Hardware Security Module (HSM), whether the security of the HSM has been compromised. In response to receiving an indication from the security processor 206 that the HSM has been compromised, the processor 202 is configured, rather than performing a normal booting operation, to start up in an error state indicating an alarm, preventing the full functionality of the HSM from being implemented. In response to receiving an indication from the security processor 206 that the HSM has not been compromised, the processor 202 is configured to continue start up (e.g. a normal boot operation), thereby making the functionality of the HSM available for use.

Fig. 1B is a schematic illustration showing a cross-sectional view of a Hardware Security Module (HSM) according to an example. In particular Fig. 1B shows a cross-section across line A-A' shown in Fig. 1A. As can be seen from Fig. 1B, the security processor 206, the processor 202 and the crypto co-processor 204 are located on a surface of the Printed Circuit Board (PCB) 200. Optionally the Printed Circuit Board (PCB) is a multilayer Printed Circuit Board. The Printed Circuit Board comprises connections between the various components as discussed above in relation to Fig. 1A, including between the security processor 206 and the processor 202 for example. In particular Fig. 1B shows a plurality of electrically conductive connections 210, between the various components of the HSM, optionally as illustrated on the surface of the Printed circuit board 200.

As can be seen from Fig. 1B, each of the components and the interconnections are accessible. As a result, a malicious third party with physical access to the HSM could tamper with the components in order to access the cryptographic keys of the user for example. For example, a malicious third party could measure the voltage on the traces between components in order to determine the data being transferred between components. Alternatively or additionally, a malicious third party could disconnect or imitate the functionality of the security processor 206 to falsely indicate to the processor 202 that that the HSM has not been tampered with.

In order to mitigate against such attacks, an encapsulation layer may be provided to protect the components and connections on the Printed Circuit Board (PCB) from tampering.

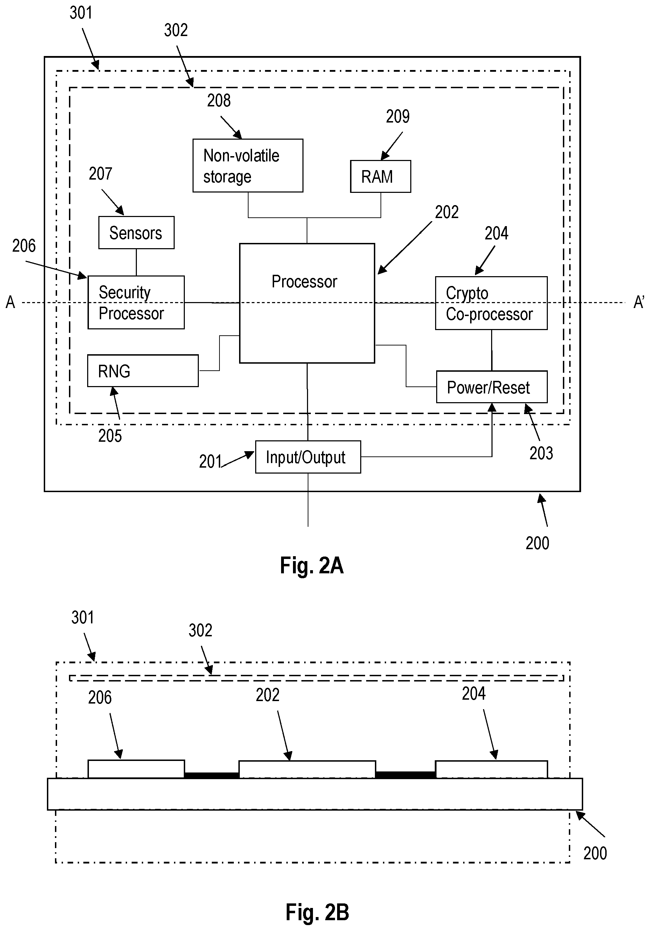

Fig. 2A shows a plan view of a Hardware Security Module (HSM) according to an example, comprising a tamper resistant coating 301 which is an encapsulation layer. Fig. 2A uses the same reference numerals as Fig. 1A to denote the same components.

The Hardware Security Module (HSM) shown in Fig. 2A comprises an encapsulation layer 301. The encapsulation layer 301 extends over all of the components in the Hardware Security Module (HSM). The encapsulation layer 301 extends over the surface of the PCB on which the various hardware components are located, and over the other surface also (in other words, it includes two encapsulation sub-layers on opposite major surface of the PCB and substantially in register with each other). The encapsulation layer 301 forms a complete barrier around all of the hardware components on the PCB, such that the components cannot be accessed without penetrating the encapsulation layer 301.

The encapsulation layer 301 provides a tamper resistant means, in other words a mechanism to protect against an unauthorised party physically accessing the components on the Printed Circuit Board 200. An attacker may attempt to gain access to the components by removing some of the encapsulation layer 301, for example by abrasion attacks (e.g. rubbing the surface with sand paper) or chemical attacks. However, such attacks are likely to destroy the hardware components, and/or provide evidence that an attack has happened. For example, an organisation receiving the HSM can easily detect whether the encapsulation layer 301 shows signs of having been drilled. Since, as noted above, the encapsulation layer 301 typically extends over both major surfaces of the PCB, an attack from either side of the PCB has to go through the encapsulation layer 301.

In this way, the encapsulation layer 301 defines a security boundary, within which data can be stored and processed unencrypted. Within the encapsulation layer 301 it can be assumed that the components are physically secure. In the example of Fig. 2A, the security boundary extends over all of the components on the Printed Circuit Board 200, leaving only the external connections to the PCB 200 (such as the PCIe connection) exposed.

The encapsulation layer 301 may be formed of an epoxy resin. Epoxy resin encapsulation layers provide good resistance to chemical and abrasion attacks for example. Alternatively, the encapsulation layer 301 could be formed from Acrylic, Ceramic or Silicone for example. Preferably the encapsulation layer 301 is opaque, so that the position of the encapsulated components is not visible through it. One specific example of an allowable resin is PX439XS, which is available from Robnor Resins Limited of Swindon, UK. This resin is black or beige in colour.

Optionally, the Hardware Security Module (HSM) further comprises a tamper detection means in the form of a wire mesh 302. The wire mesh 302 is configured to extend over all of the components of the HSM, such that the components sit within the area underneath the wire mesh. Optionally, the wire mesh 302 extends completely around the components of the HSM, i.e. vertically down to the Printed Circuit Board 200 and horizontally across the Printed Circuit Board 200 to form a protective cage, such that the components of the HSM cannot be accessed without penetrating the encapsulation layer 301 and the wire mesh 302, or the Printed Circuit Board 200.

The wire mesh 302 forms part of the set of sensors 207, which is coupled to the security processor 206 and is configured to detect when an attempt to access the components has been made. The security processor 206 is operative to transmit an electrical current through the wire mesh, typically of the order of nanoamps. In one example, the wire mesh 302 comprises two electrically conductive layers, thereby forming a capacitor. During an intrusion attempt the physical arrangement of the electrically conductive layers will be disturbed, and as a result the capacitance of the wired mesh will change. The security processor 206 is configured to receive measurements which indicate any change in the capacitance of the wire mesh 302. In a variation, the security processor 206 may alternatively or additionally receive measurements which indicate an impedance or resistance of the wire mesh, e.g. to detect if the wire mesh provides a short circuit or an open circuit. In any of these cases, if a change is detected, the security processor 206 provides an indication to the processor 202 that the security of the HSM has been compromised. Optionally, in response to this indication the functionality of the HSM is suspended, an operator of the HSM is alerted and/or the sensitive information stored by the HSM is destroyed. In this way, the wire mesh 302 provides a tamper detection means.

Fig. 2B shows a cross sectional view of the Hardware Security Module (HSM) of Fig. 2A, showing the tamper resistant means in the form of an encapsulation layer 301 and the tamper detection means in the form of a wire mesh 302. The encapsulation layer 301 is typically, but not necessarily, of substantially uniform thickness.

Optionally some components of the HSM are not encapsulated in the encapsulation layer 301. For example the battery (if any) is generally not encapsulated in the encapsulation layer 301 so that it can be replaced as needed. Additionally, the IO connector 201 is not encapsulated in the encapsulation layer.

Nevertheless, as will be appreciated from Fig. 2A and Fig. 2B, while making the HSM more secure, the encapsulation layer 301 and the wire mesh 302 may also prevent a legitimate user from accessing components of the HSM for testing, debugging, repair or replacement for example. In this manner, the lifespan or reliability of the HSM is compromised.

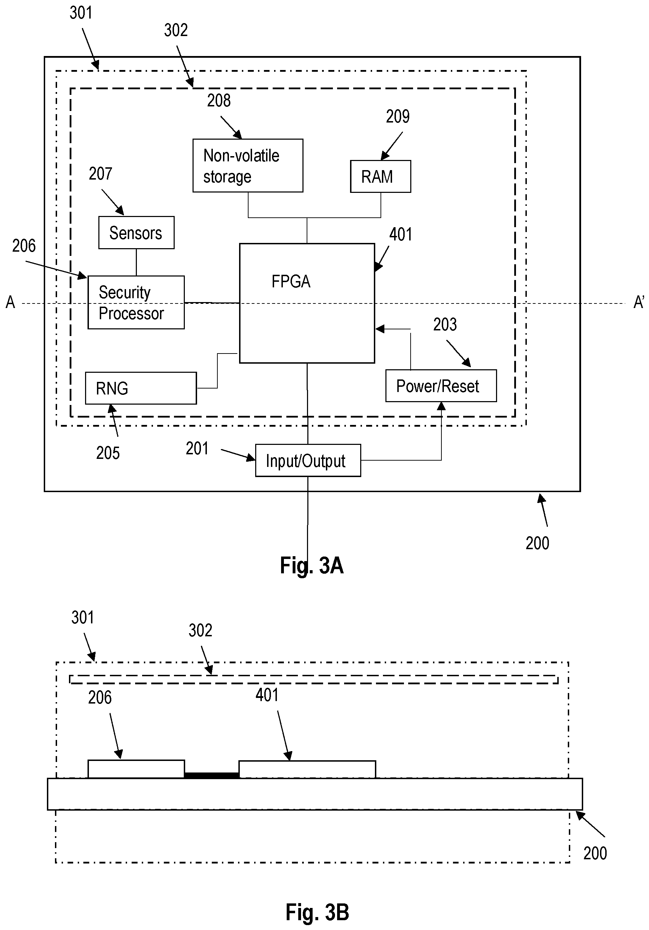

Fig. 3A shows a schematic illustration of a plan view of a Hardware Security Module (HSM) device according to a further example. Fig. 3A uses the same reference numerals as Fig. 2A to denote the same components.

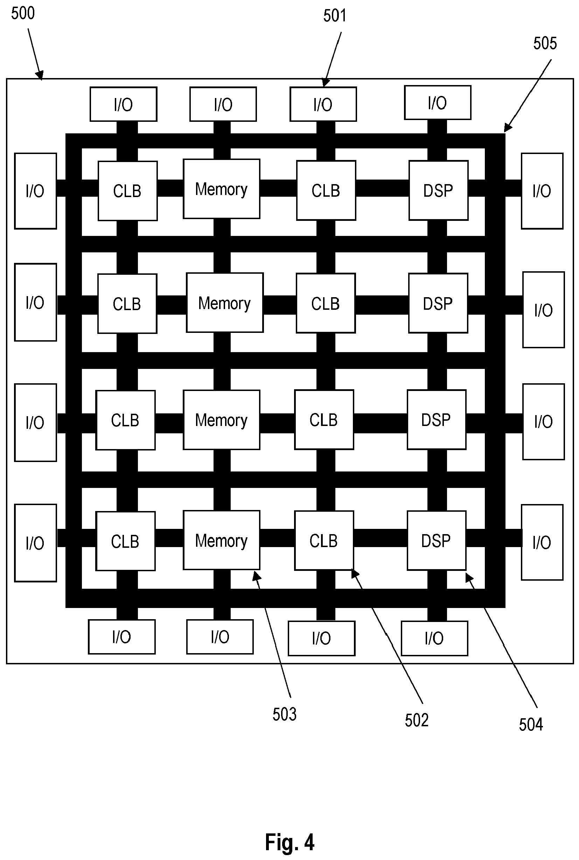

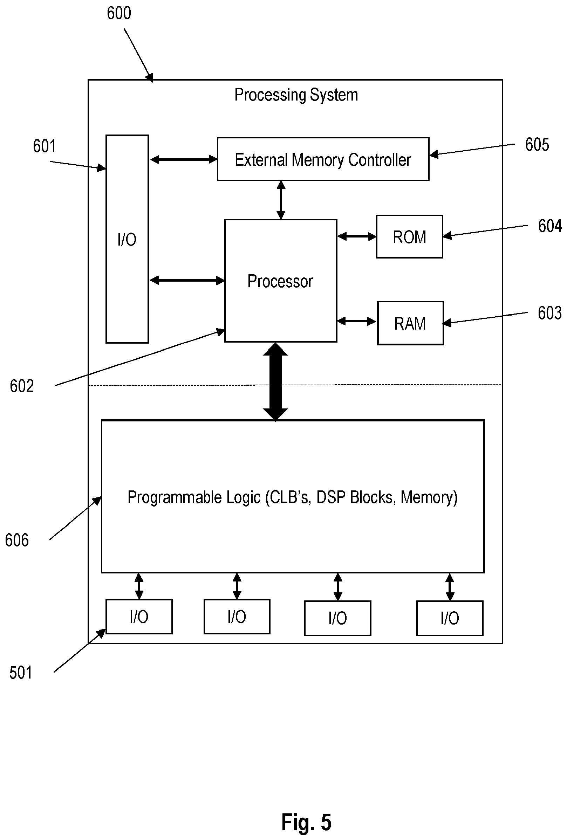

The Hardware Security Module (HSM) of Fig. 3A comprises a Field Programmable Gate Array (FPGA) 401. This is preferably a System-on-chip FPGA (SoC FPGA) as described below with reference to Fig. 5, although implementations are possible in which the FPGA is a non-SoC FPGA, such as described below with reference to Fig. 4. The FPGA 401 is a single, discrete, self-contained package that implements various functionality performed by the processor 202 and the crypto-coprocessor 204 as described in relation to Fig. 1A. (Alternatively, this functionally may be provided by the FPGA 401 in combination with a separate non-programmable processor (not shown)). The FPGA 401 does this by interacting with the non-volatile storage 208 and the RAM 209. The non-volatile storage 208, the RAM 209, and the at least one processor are each implemented as discrete, individually-packaged, components. A SoC FPGA is an integrated circuit comprising a fixed Central Processing Unit and an array of programmable logic blocks and a hierarchy of reconfigurable interconnects that allow blocks to be wired together in order to implement a user specified functionality. A non-Soc FPGA does not include a CPU. Unlike a conventional Central Processing Unit, an FPGA can be configured after its manufacture. A manufacturing step defines the fixed logic that is present in the FPGA, including the programmable logic blocks, the presence of any specific Digital Signal Processing or Memory blocks etc.. However, the functionality implemented by the FPGA is then defined at a later stage when the interconnections between the various blocks are formed.

Fig. 4 shows a schematic illustration of an example non-SoC Field Programmable Gate Array (FPGA), which can be included in a HSM device of one of the examples above, or according to one of the embodiments described below. For example, the FPGA 401 included in the HSM of Fig. 3A may comprise an FPGA as shown in Fig. 4.

Fig. 4 shows an FPGA 500 comprising a plurality of Input/Output (I/O) interfaces 501, a plurality of functional blocks 502, 503, 504. In an example, these could be implemented as Configurable Logic Blocks (CLB) 502, a plurality of memory blocks 503, and a plurality of Digital Signal Processing (DSP) blocks 504, connected by a wiring network 505. The wiring network 505 comprises a plurality of vertical and horizontal channels communicatively coupled to the Input/Output (I/O) interfaces 501, the Configurable Logic Blocks (CLB) 502, the memory blocks 503, and the Digital Signal Processing (DSP) blocks 504, thereby forming a communication bus to which each of the blocks are connected and through which each of the blocks can communicate.

The wiring network 505 also comprises a plurality of switch blocks at the intersection of vertical and horizontal channels. The switch blocks programmably route connections, i.e. can be programmed to form a connection, from a source to a destination (a 1 to 1 connection) or from a source to a plurality of destinations (a 1 to many connection), thereby forming a connection between the different blocks of the FPGA 500. The FPGA architecture shown in Fig. 4 is known as an island-style architecture because it comprises a two-dimensional array of blocks comprising configurable logic blocks, memory blocks and DSP blocks (i.e. the islands) within a sea of routing interconnections. Other FPGA architectures can alternatively be used.

A Configurable Logic Block (CLB) 502 comprises a programmable Look Up Table (LUT) and register. A Look Up Table (LUT) comprises an array of data which maps input values to output values.

A memory block 503 comprises Random Access Memory (RAM) that is used by the configurable logic of the FPGA.

A Digital Signal Processing (DSP) block 504 comprises dedicated logic circuits (i.e. fixed circuits) for performing digital signal processing operations.

An Input/Output (I/O) interface 501 comprises an interface through which information can be received into the FPGA 500 and through which information can be transmitted out of the FPGA 500. Optionally each Input/Output interface 501 is associated with a pin of the FPGA package i.e. a metal connection to which a wire or a trace on the PCB 200, such as electrically conductive connection 210, can be connected. Optionally the Input/Output (I/O) interface 501 supports various different signalling techniques including, but not limited to, Low Voltage CMOS signalling (LVCMOS), Low Voltage Differential Signalling (LVDS) and/or Stub Series Terminated Logic (SSTL).

The process of configuring the FPGA to implement the desired logic functions is referred to as the FPGA design flow. A first step of the FPGA design flow is design entry. In this step a user generates a description of the hardware circuit that the FPGA is to implement. The description may take the form of a schematic. Alternatively, and more likely for complicated designs, the hardware circuit may be described using a Hardware Description Language (HDL) such as VHDL (Very high speed integrated circuit Hardware Description Language).

A second step of the FPGA design flow is synthesis. During synthesis the high-level hardware description of the circuit, which may be in the form of a Hardware Description Language, is converted to a hardware architecture (i.e. a gate-level circuit) that uses the primitives of the specific FPGA, i.e. the smallest atomic logic elements of the FPGA like flip-flops, multiplexers, block RAM etc.. The output of synthesis is a netlist, also referred to as an un-routed netlist or a post-synthesis netlist, comprising an indication of the FPGA elements used to implement the hardware circuit and an indication of the interconnections between these elements.

A third step of the FPGA design flow is place and route. During place and route the netlist (generated in step 2) is analysed and mapped to a specific physical hardware resource in the FPGA (place), the elements are then interconnected (route) to form the functionality of the hardware circuit (specified in step 1). The place and route step can be subject to a number of constraints. For example, a user can specify timing constraints to ensure logic elements will comply with timing requirements, for example a synchronous circuit being able to process data accurately at a specified clock rate. Alternately or additionally, the location of design elements can be constrained to specific areas of the FPGA die, known as location constraints.

The output of place and route is a FPGA bitstream, also referred to as a bit file. The FPGA bit stream comprises programming information that is used by the FPGA to implement the hardware circuit, i.e. implementing the functionality specified in step 1, using physical FPGA resources, according to the user constraints regarding timing/placement etc. of step 3.

The FPGA uses the bit file to configure all of the necessary areas of the FPGA in order to implement the designed functionality. This includes but is not limited to routing between each configurable logic block, configuration of each logic block, memory contents, connections to IO and configuration of pins.

Fig. 5 shows a schematic illustration of a SOC Field Programmable Gate Array (FPGA), which may be included in a HSM device according to a variation. For example, the FPGA 401 included in the HSM of Fig. 3A may comprise an SOC FPGA as shown in Fig. 5. A SOC FPGA integrates processor and FPGA architecture. An SOC FPGA is a device that comprises a System-on-a-Chip and programmable logic on the same device, thereby combining the high-level management functionality of a processor and the data processing capability of the configurable logic into a single device.

The SOC FPGA is logically divided into a processing system 600 and programmable logic 606.

The processing system 600 forms the System-on-a-Chip (SoC), and comprises an Input/Output (I/O) interface 601, processor(s) 602 such as a single (e.g. 4 core) processor, on-chip Read Only Memory (ROM) 604, on-chip Random Access Memory (RAM) 603 and external memory controller 605. Other capabilities may also be provided. The Input/Output (I/O) interface 601 is communicatively coupled to processor 602. In one example the processor 602 may be an ARM^{®} Cortex-A53 Based processor. The processor 602 is coupled to on-chip Read Only Memory (ROM) 604, and on-chip Random Access Memory (RAM) 603. The processor 602 is also coupled to external memory controller 605 configured to communicate via Input/Output (I/O) interface 601 with off-chip memory, which includes the HSM non-volatile storage 208 and RAM 209.

The processing system 600 is configured to execute program instructions retrieved from memory, for example boot instructions retrieved from the on-chip ROM 604 and application instructions retrieved from the non-volatile memory 208, such as Flash memory.

The processor 602 is configured to communicate with programmable logic 606 via an interconnect, for example a bus. In one example, the interconnect is an ARM AMBAO AXI based interface. In this way, the software being executed by the processor 602 can interact with the programmable logic 606, for example to obtain a value calculated by the programmable logic 606, start a hardware operation etc..

The programmable logic 606 comprises Configurable Logic Blocks (CLBs), Digital Signal Processing (DSP) blocks, and memory blocks as described in relation to Fig. 4. The FPGA also comprises Input/Output (I/O) interface 501 similar to those described in relation to Fig. 4 that are communicatively coupled to the programmable logic 606. A bit file for the programmable logic 606, including instructions on how to configure the programmable logic to perform the desired functionality, can be generated in the same way as discussed in relation to Fig. 4 and stored in the non-volatile memory 208 of the HSM.

In the HSM illustrated in Fig. 3A, various functionality of the processor 202 and the crypto co-processor 204 described in relation to Fig. 1A is implemented by the FPGA 401, in the following manner. In the example described below, the FPGA 401 is a SoC FPGA such as described in relation to Fig. 5. However, alternatively the FPGA 401 may be an FPGA such as described in relation to Fig. 4.

As described in relation to Fig. 1A, the application computer program code is stored in the non-volatile memory 208 of the HSM. The processing system 600 of the FPGA 401 is configured to execute the application, which may be loaded directly into the SoC RAM 603 and/or via the RAM 209. Also stored in the non-volatile memory 208 on the HSM are any components necessary to execute the application, including runtime system files. When executed, a copy of the application machine code is loaded into the processing system 600. Execution of the application by the processing system 600 causes various functionality of a Hardware Security Module (HSM), such as generating cryptographic keys, storing cryptographic keys, or performing cryptographic operations etc., to be implemented.

Additionally the FPGA 401 is configured to perform, using the configurable logic 606, various cryptographic functions in hardware, for example various standard encryption and decryption algorithms, and digital signature algorithms. For example, the FPGA 401 is configured to provide at least one of: a public key hardware accelerator (PKSA), a random number generator, an advanced encryption standard accelerator (AESA) and a message digest hardware accelerator (MDHA). In the FPGA 401, one or more of these operations are implemented directly in hardware.

The programmable logic 606 is configured to receive requests to perform one or more of these operations from the processing system 600 and to return to the processing system 600 the output of the operation. The processing system 600 is configured to off-load various operations to the programmable logic 606. The programmable logic 606 is configured to perform certain operations in hardware, meaning that these operations may be performed more efficiently on the programmable logic 606 than on the processing system 600.

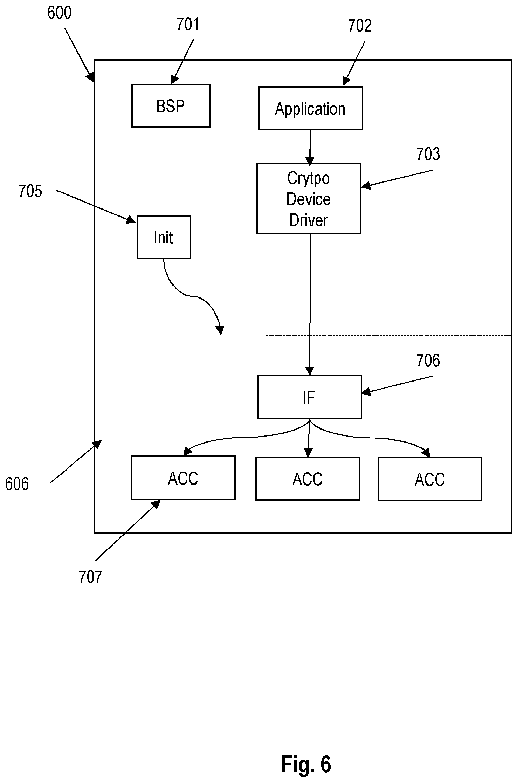

Fig. 6 shows a schematic illustration of an SOC FPGA in which various functionality is implemented. The FPGA is a SOC FPGA such as described in relation to Fig. 5. The dashed line shows a logical split between functionality performed by the processing system 600 and the programmable logic 606.

As described previously, the application computer program code is stored in the non-volatile memory 208 of the HSM. When executed, a copy of the application machine code is loaded into the processing system 600, where the application 702 is represented as a software product, or process, in the working memory of the processing system 600.

The application process 702 calls a crypto device driver module 703 when certain cryptographic operations are to be performed. Computer program code corresponding to the crypto device driver module is stored in the non-volatile memory 208 of the HSM, and is retrieved by the application. When executed, a copy of the program code is loaded into the processing system 600, as a software product, or process, in the working memory of the processing system 600. The crypto device driver module 703 implements a driver process which coordinates data transfer to and from the FPGA, and provides an initialization process "Init" 705 which is configured to initialise other components of the hardware of the HSM which the crypto device driver 703 is driving, such as the components implemented in programmable logic.

The driver 703 is configured to access the interface between the processor 602 and the programmable logic 606. The processor 602 is configured to off-load various operations to the programmable logic 606. The programmable logic 606 is configured to perform certain operations in hardware, meaning that these operations may be performed more efficiently than on the processor 602. The application process 702 calls the crypto device driver module 703. The driver module 703 sends a request to perform the operation to the programmable logic 606. The programmable logic 606 has hardware implementations of one or more cryptographic operations.

A board support package (BSP) process 701, such as a Linux BSP, also runs on the processing system 600.

An optional IF (interface) component 706 is implemented in the programmable logic, the IF component 706 is configured to access, and balance the load across, a plurality of acceleration cores ACC 707. Each ACC corresponds to a section of the FPGA hardware which is configured to implement one or more cryptographic functions. Each core is typically identical. It may correspond to a cryptographic function, implemented in hardware, e.g. a symmetric security algorithm.

In this example, the FPGA is a SOC FPGA as shown in Fig. 5. As described, various functionality performed by the processor 202 in the device of Fig. 1 is performed by the processor 602 of the SOC FPGA. Various functionality performed by the crypto co-processor in the device of Fig. 1 is performed by the programmable logic 606 of the SOC FPGA.

In the case where the FPGA is implemented using an FPGA as shown in Fig. 4, the functionality performed by the processor 202 in the device of Fig. 1 is implemented by a soft processor, also referred to as a soft-core processor, which is a processor implemented using the programmable logic resources of the FPGA.

By implementing various functionality of the crypto co-processor 204 of the device of Fig. 1 in an FPGA, the HSM device is made reconfigurable. The FPGA can be reconfigured to implement a more secure version of an operation implemented in hardware for example.

The FPGA may be further configured to store, and when appropriate output, an ID for the HSM, which can be used for interactions between the manufacturer of the HSM and an owner of the HSM (for example, for trouble-shooting or operating a warranty). Furthermore, the function performed by the FPGA may be made device-specific, e.g. by arranging it to depend upon the ID and/or physically uncloneable functions ("pufs"). Tampering with the HSM would change what the output will be, since this cannot be deduced from the SP and FPGA as fabricated.

In another option, the FPGA may be configured to provide a security monitor block, which monitors changes to the logic blocks 502, and provides a security option (e.g. generate a warning or limit the operations performed by the HSM) when such a change is observed, and thereby protects the HSM against reconfiguration. Furthermore, the FPGA may be configured (e.g. at intervals) to read the status of each logic block 502, and verify that it is as expected. This makes it harder for an intruder to maliciously switch the logic blocks. Furthermore, the FPGA may provide a short-term RAM function, e.g. backed by the battery of the HSM. Further technical advantages may be provided by an appropriate choice of the FPGA, for example if the FPGA is implemented as a Zynq^{®} Ultrascale+^{™} device, this device provides the advantages explained in technical document XAPP1323 describing that device.

The process of re-configuring the FPGA to implement the more secure version of the operation starts with the user generating a description of the new hardware circuit, using a Hardware Description Language (HDL) for example. During synthesis the high-level hardware description of the circuit is converted to a netlist. During place and route, the netlist is analysed and mapped to a specific physical hardware resource in the FPGA (place), and the elements are then interconnected (route) to form the functionality of the hardware circuit. The output of place and route is a new bit file. The new FPGA bit file is then loaded in to non-volatile memory 208 of the HSM, and the FPGA is configured to read the new bit file from the non-volatile memory during power up and to implement the functionality of the new bit file, resulting in the new configuration corresponding to the more secure version of the operation.

Furthermore, by implementing functionality of the processor 202 and the crypto coprocessor 204 of the device of Fig. 1 on a single chip comprising the FPGA 401, the area to be protected with a tamper resistant means can be reduced. Fig. 3B shows a cross sectional view of the Hardware Security Module (HSM). The Hardware Security Module (HSM) comprises an encapsulation layer 301. The encapsulation layer 301 extends over the FPGA 401 and the security processor 206, and over some or all of the other components in the Hardware Security Module (HSM), though not typically over the IO connector 201. As will be apparent from Fig. 3A and Fig. 3B, the tamper resistant means 302 may cover a smaller area. Optionally, the example Hardware Security Module (HSM) comprises a tamper detection means in the form of a wire mesh 302. By combining functionality into a single chip, the area prone to a security vulnerability has been reduced.

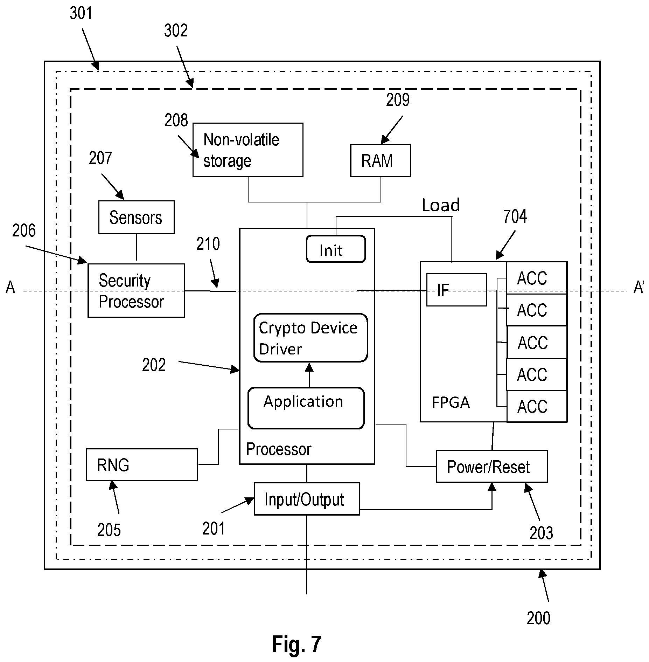

Fig. 7 is a schematic illustration of a plan view of a HSM device according to a fourth example, wherein the HSM device comprises an FPGA 704. For example, the FPGA 704 may comprise an FPGA as shown in Fig. 4. In Fig. 7, the same reference numerals as Fig. 3A are used to denote the same components.

The Field Programmable Gate Array (FPGA) 704 is a single, discrete, self-contained package that implements various functionality performed by the crypto-coprocessor 204 as described in relation to Fig. 1A.

As described in relation to Fig. 1A, the application computer program code is stored in the non-volatile memory 208 of the HSM. The processor 202 is configured to execute the application as described in relation to Fig. 1A. The FPGA 704 is configured to perform, using configurable logic, various cryptographic functions in hardware, for example various standard encryption and decryption algorithms, and digital signature algorithms. For example, the FPGA 704 is configured to provide at least one of: a public key hardware accelerator (PKSA), a random number generator, an advanced encryption standard accelerator (AESA) and a message digest hardware accelerator (MDHA). In the FPGA 704, one or more of these operations are implemented directly in hardware.

The FPGA 704 is configured to receive requests to perform one or more operations from the processor 202 and to return to the processor 202 the output of the operation. The processor 202 is configured to off-load various operations to the FPGA 704. The FPGA 704 is configured to perform certain operations in hardware, meaning that these operations may be performed more efficiently on the FPGA 704 than on the processor 602.

As described previously, the application computer program code is stored in the non-volatile memory 208 of the HSM. When executed, a copy of the application machine code is loaded into the processor 202, where the application is represented as a software product, or process, in the working memory of the HSM.

The application process calls a crypto driver device module when certain cryptographic operations are to be performed. Computer program code corresponding to the crypto device driver module is stored in the non-volatile memory 208 of the HSM and retrieved by the application process. When executed, a copy of the program code is loaded into the working memory of the HSM, where the crypto device driver module is represented as a software product, or process, in the working memory of the HSM. The crypto device driver is configured to access the FPGA 704. The crypto device driver process sends a request to perform the operation to the FPGA 704. The programmable logic 606 has hardware implementations of one or more cryptographic operations. The crypto device driver module implements a driver process which coordinates data transfer to and from the FPGA, and provides an initialization process "Init" which is configured to initialise other components of the hardware of the HSM which the crypto device driver is driving, such as the components implemented in programmable logic in the FPGA 704.

An optional IF (interface) component 706 is implemented in the programmable logic of the FPGA 704. The IF component 706 is configured to access, and balance the load across, a plurality of acceleration cores ACC of the FPGA 704. Each ACC corresponds to a section of the FPGA hardware which is configured to implement one or more cryptographic functions. Each core is typically identical. It may correspond to a cryptographic function, implemented in hardware, e.g. a symmetric security algorithm.

By implementing various functionality of the crypto co-processor 204 of the device of Fig. 1 in an FPGA 704, the HSM device is made reconfigurable. The FPGA 704 can be reconfigured to implement a more secure version of an operation implemented in hardware for example.

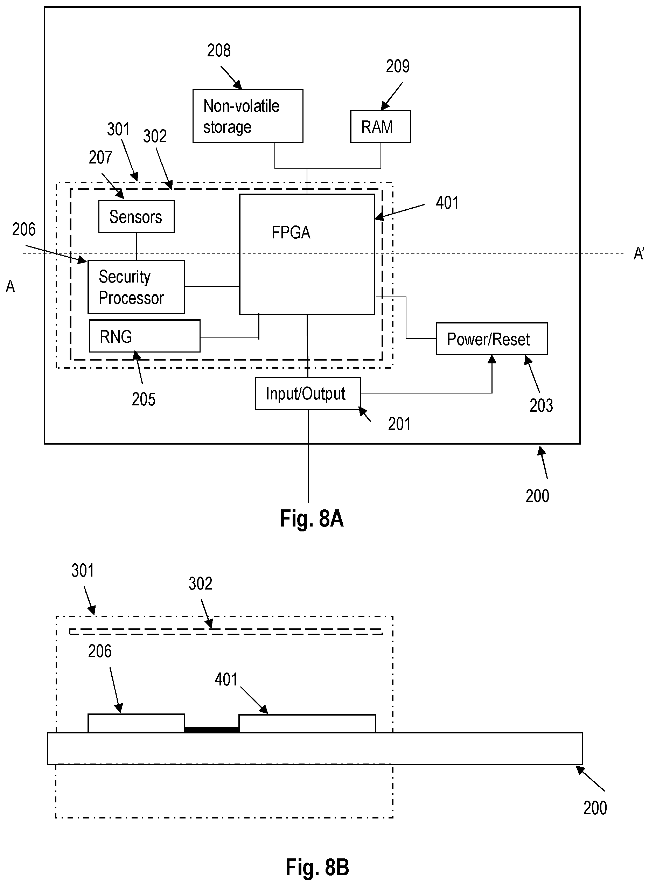

Fig. 8A shows a schematic illustration of a plan view of a Hardware Security Module (HSM) device according to an embodiment, where the HSM comprises an FPGA 401. Fig. 8B shows a schematic illustration of a cross sectional view of the Hardware Security Module (HSM) device. In Fig. 8A and Fig. 8B the same reference numerals as Fig. 3A are used to denote same components. In this example, the FPGA 401 comprises a SOC FPGA as shown in Fig. 5. In alternative examples, the FPGA 401 is an FPGA as shown in Fig. 4 for example.

In the Hardware Security Module (HSM) of Fig. 8A and 8B, the security processor 206, the sensors 207, the random number generator (RNG) 205, and the FPGA 401 are covered by the encapsulation layer 301. Although in Fig. 8B, the security processor 206, FPGA 401 and sensors 207 are shown mounted on the same major surface of the PCB 200, in a variation any one or of them may be mounted on the opposite surface of the PCB 200 from the rest. Electrical connections may be provided extending within the PCB as required. Typically all the pins of all the integrated circuit components are covered by the encapsulation layer 301, although in principle the pins which provide electrical connections to components outside the encapsulation layer, such as the IO connector 201, may be exposed. The HSM may further include a power source (e.g. a battery) outside the encapsulation layer 301.

The Random Access Memory 209 of the HSM is not covered by the encapsulation layer 301. Instead, sensitive data stored in the Random Access Memory (RAM) 209 is encrypted. Furthermore, this sensitive data is also in the encrypted form when communicated between the FPGA 401 and the Random Access Memory (RAM) 209. One way of doing this is for the FPGA to request random numbers from the RNG 205. When data is to be stored in the RAM 209, the FPGA 401 first modifies at least part of it (encrypts it, e.g. in a simple example by performing an XOR operation) between the data to be stored and one of the random numbers, and writes the result to the RAM 209. The random number is stored in the FPGA 401. When the data is read from the RAM 209, it is decrypted (e.g. in the simple case by the XOR operation again), to obtain the original data. Note that the same random number may be used (e.g. with permutations) to encrypt in this way multiple portions of the data to be stored in the RAM 401, so that the amount of data which is encrypted using a given random number can be much greater than the size of the random number which is stored in the FPGA 401. When all data which has been encrypted using a given random number has been decrypted, the FPGA 401 may request a new random number from the RNG 205 to replace it. If the FPGA 401 is powered down, the random number is lost, so that data currently stored in the RAM 401 cannot be decrypted.

In a variation, other, normally basic, encryption algorithms may be used. For example, the FPGA 401 may store a second cryptographic key. The second cryptographic key may be stored within an internal Battery-Based Random Access memory (BBRAM) or using an electronic fuse (eFuse) within the FPGA 401. Sensitive data is encrypted using the second cryptographic key before it leaves the FPGA 401. The second cryptographic key does not leave the FPGA 401. The sensitive data is stored in the RAM 209 in encrypted form.

In the embodiment of Fig. 8A, the tamper resistant means 301 does not cover the RAM 209, the non-volatile memory 208, the input/output 201, or the power resent 203 (or the power source (battery), not shown). These components, e.g. RAM memory 209, can therefore be readily repaired or replaced, improving the reliability of the HSM device. In this embodiment, the HSM device includes a tamper detection means 302 in the form of the wire mesh explained above. The tamper detection means 302 does not cover various components, in particular the RAM 209 of the HSM device.

The HSM stores master keys at least partly in the security processor 206 and/or at least partly in the FPGA 401, i.e. covered by the encapsulation 301 and the tamper detection means 302. For example, they may be stored in a part of the FPGA 401 which is supported by the battery and which loses the master keys if the power is lost.

The non-volatile storage 208 is also not covered by the encapsulation layer 301. The non-volatile storage 208 stores the application program code to be implemented by the FPGA 401, and a bit file comprising information identifying a configuration of the programmable logic resources within the FPGA 401 (as noted above, the term FPGA is used here to include both FPGA and SoC FPGAs, except when otherwise specified). The application program code and the bit file are stored in an authenticated form (but not encrypted) in the non-volatile storage 208, whereas the keys (e.g. the cryptographic keys) may be stored in the non-volatile storage in an encrypted form (e.g. encrypted using the master keys). When the non-volatile storage 208 is installed, the FPGA 401 may perform an authentication process for the non-volatile storage 208 based on the data stored within it. In addition, the FPGA 401 reads and decrypts the keys.

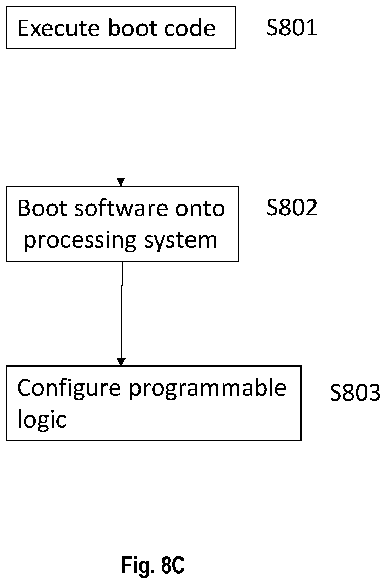

The FPGA 401 uses a "secure boot" process during start-up. Fig. 8C shows an example method of initialising the HSM device. The method may be performed on power up of the HSM, for example in response to receiving a "power-on" or "reset" signal at the "power/reset" component.

In S801, boot code stored in the FPGA ROM 604 is executed.

In S802, software from the HSM non-volatile storage 208 is retrieved, verified and loaded into the processing system 600. This step may comprise several stages, in which the boot code first retrieves and executes first software from the non-volatile storage 208, which in turn retrieves and executes second software from the non-volatile storage 208 and so on. S802 comprises booting software onto the processing system 600.

As part of this process, the authenticated application program code is retrieved from the non-volatile storage 208. The FPGA 401 stores a first cryptographic key (e.g. a master key) which is used to recover and validate the keys. Optionally, the first key is stored an internal Battery-Based Random Access memory (BBRAM) or using an electronic fuse (eFuse).

In S803, software running on the processing system 600 then configures the programmable logic 606. During the HSM initialisation, the software running on the processing system 600 retrieves and authenticates the bit file comprising information identifying a configuration of the programmable logic from the non-volatile storage 208 of the HSM. The software running on the processing system 600 configures the programmable logic 606.

Sensitive data stored within the non-volatile storage 208 is not "in the open". That is, the sensitive data is stored in the non-volatile storage 208 in an encrypted form. Even if information was read from the non-volatile storage 208 by a malicious actor with physical access to the HSM device, the sensitive data cannot be obtained without access to the first cryptographic key. The first cryptographic key is stored within the FPGA 401, which is inside the security boundary formed by the encapsulation layer 301, and therefore cannot be physically accessed by the malicious actor. The authenticated and encrypted keys are now retrieved from the non-volatile storage 208.

The tamper resistant means 301 does not cover the non-volatile storage 208. The non-volatile storage 208 can therefore be readily repaired or replaced, improving the reliability of the HSM device.

In this example, the HSM device includes a tamper detection means 302. The tamper detection means 302 does not cover the non-volatile storage 208 of the HSM device.

By using a secure boot process to initialise the FPGA 401, and encrypting data in the RAM 209, the security boundary formed by the encapsulation layer 301 can be reduced such that the encapsulation layer 301 only covers the security processor 206, the sensors 207, RNG 205 and the FPGA 401. These components are the only components where sensitive data in an unencrypted form is present, or where data used to determine the security of the Hardware Security Module is present.

By reducing the number of components covered by the encapsulation layer, debugging, testing and maintenance of the PCB 200 is made easier.

Note that different areas within the FPGA 401 may be configured to handle information with different levels of security. For example, there may be a "decision" section, which is the main logic of the FPGA 401 but never handles unencrypted keys, and an "enforcement" section which handles the unencrypted keys, and checks the actions of the main logic. This reduces to some extent the level of security which is need by the decision section.

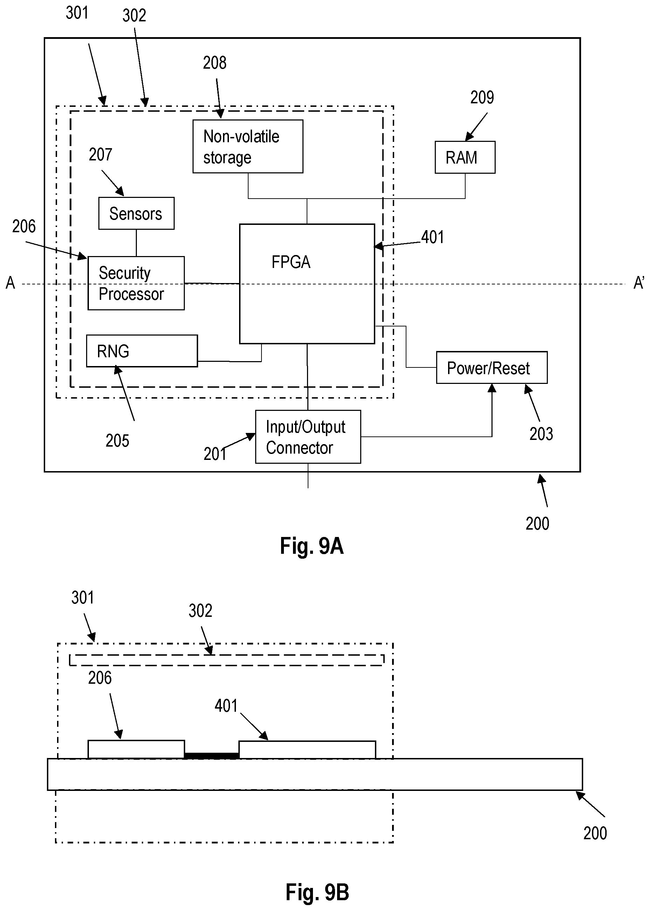

Fig. 9A shows a schematic illustration of a plan view of a Hardware Security Module (HSM) according to another embodiment. Fig. 9B shows a cross sectional view of the Hardware Security Module (HSM). In Fig. 9A and Fig. 9B the same reference numerals as Fig. 3A are used to denote same components.

Fig. 9A shows a Hardware Security Module (HSM) where the security processor 206, the sensors 207, the non-volatile storage 208, the RNG 205, and the FPGA 401 are covered by the encapsulation layer 301.

In particular, in Fig. 9A the security boundary is increased to cover the non-volatile storage 208. Sensitive data may therefore be stored in the non-volatile storage 208 in the plain, i.e. without encryption.

As described in relation to Fig. 8A, data stored in the Random Access Memory (RAM) 209 and data communicated, in use, between the FPGA 401 and the Random Access Memory (RAM) 209 is encrypted. As a result, in this case there is no vulnerable data (i.e. data that can be intercepted and lead to a security vulnerability) stored on the RAM 209. Instead, the RAM 209 stores data in an encrypted form, which could only be decrypted by breaking the security boundary in which the FPGA 401 is located. Consequently, when the data is stored in the RAM it is not "in the open" in a form that can be readily understood by a malicious third party.

As a result, the tamper resistance and tamper detection means are not required to cover the RAM 209 since this is no longer a vulnerable part of the HSM. The tamper resistant means 301 does not cover the RAM 209. The RAM 209 can therefore be readily repaired or replaced, improving the reliability of the HSM device.

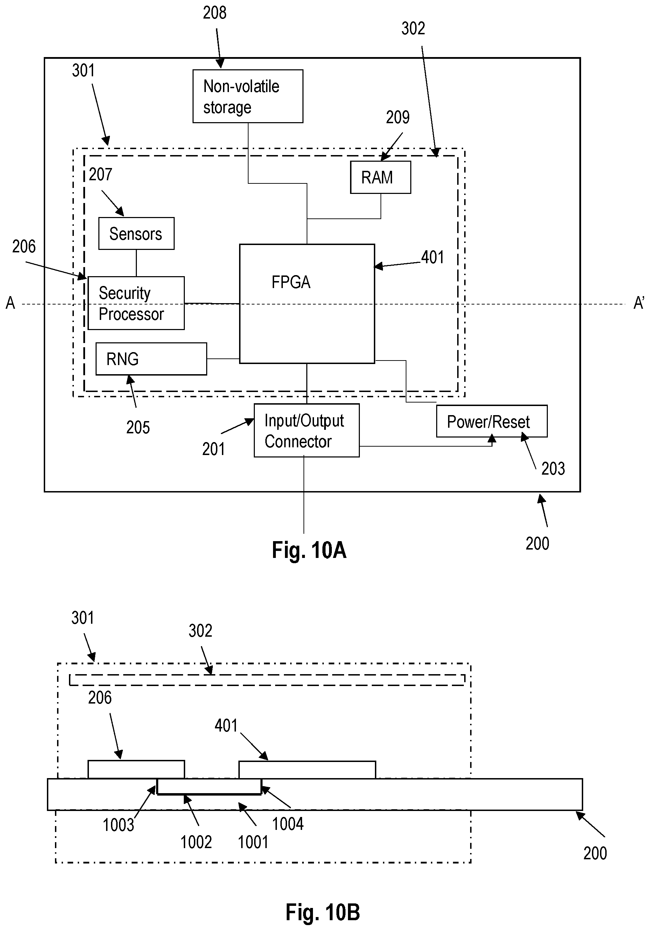

Fig. 10A shows a schematic illustration of a plan view of a Hardware Security Module (HSM) according to another embodiment. Fig. 10B shows a cross sectional view of the Hardware Security Module (HSM). In Fig. 10A and Fig. 10B the same reference numerals as Fig. 3A are used to denote same components. In this embodiment, only the security processor 206, the sensors 207, the RNG 205, the RAM 209 and the FPGA 401 are covered by the encapsulation layer 301. The non-volatile storage 208 is not covered by the encapsulation layer 301.

The RAM 209 is covered by the encapsulation layer 301, and therefore data can be stored and communicated to the RAM 209 in the plain, in other words without encryption.

As described in relation to Fig. 8, the non-volatile storage 208 is not covered by the encapsulation layer 301. The application program code and the bit file are stored in an authenticated form in the non-volatile storage 208, and keys stored in the non-volatile storage 208 are encrypted. The FPGA 401 uses a "secure boot" process during start-up.

Again, the sensitive data stored within the non-volatile storage 208 is in an encrypted form. Even if information was read from the non-volatile storage 208 by a malicious actor with physical access to the HSM device, the sensitive data cannot be obtained without access to the first cryptographic key. The first cryptographic key is stored within the FPGA 401, which is inside the security boundary formed by the encapsulation layer 301, and therefore cannot be physically accessed by the malicious actor.

The tamper resistant means 301 does not cover the non-volatile storage 208. The non-volatile storage 208 can therefore be readily repaired or replaced, improving the reliability of the HSM device.

In this example, the HSM device includes a tamper detection means 302. The tamper detection means 302 does not cover the non-volatile storage 208 of the HSM device.

As shown in Fig. 10B, the electrical connection between the FPGA 401 and the security processor 206 is provided as an electrical connection 1001. The electrical connection 1001 has a "U-shaped" configuration, which includes a conductive elongate portion 1002 which is within the PCB 200 and extends in a plane parallel to the major surfaces of the PCB (i.e. horizontally as shown in Fig. 10B). It also includes conductive portions 1003, 1004 (vias) at either end of the portion 1002 which extend substantially transverse to the major surfaces of the PCB 200, and provide electrical connections respectively from the portion 1002 to the security processor 206 and the FPGA 401. The portions 1003, 1004 of the electrical connection 1001 make electrical contact with the FPGA 401 and security processor 206 at respective locations which are spaced (in the horizontal direction as shown in Fig. 10B) from the periphery of the security processor 206 and the FPGA 401 on the surface of the PCB 200. In other words, the locations are on the "under" surfaces of the security processor 206 and the FPGA 401 (the surfaces of the security 206 and the FPGA 401 which rest on the PCB 200), spaced from the edges of those surfaces. Thus, Fig. 10B shows an example of the electrically conductive connections mentioned above which extend within the PCB, with electrical conductive connections transverse to the major surfaces of the PCB being provided by vias. One or more electrically conductive connections of this kind may be provided in any of the embodiments. As shown in Fig. 10B, they may connect two components within the encapsulation layer 301. Additionally, as also shown in Fig. 10B, they may connect to the components at respective locations which are spaced from the periphery of the components on the PCB.

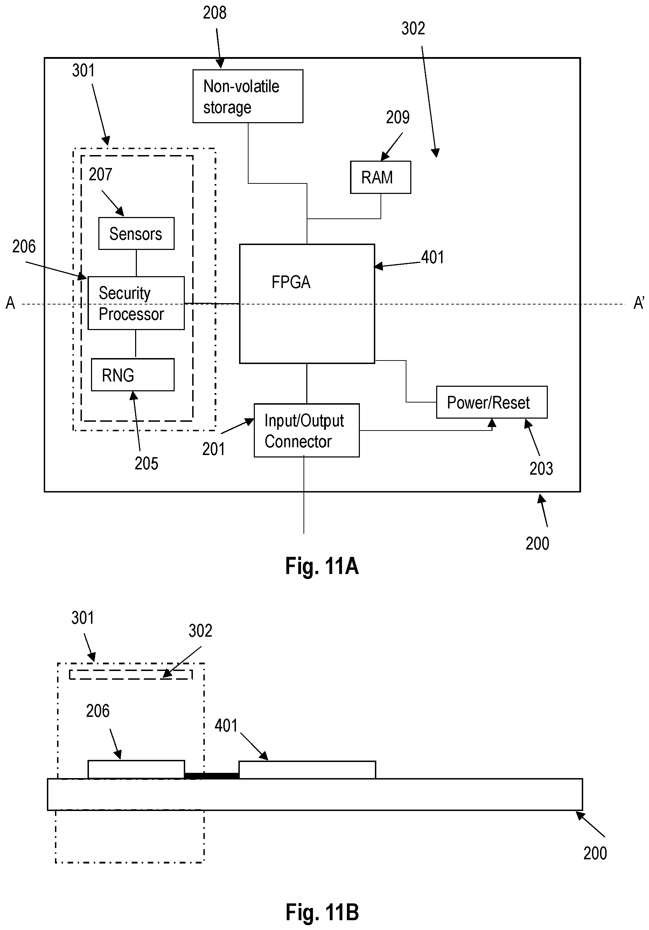

Fig. 11A shows a schematic illustration of a plan view of a Hardware Security Module (HSM) according to another embodiment. Fig. 11B shows a cross sectional view of the Hardware Security Module (HSM). In Fig. 11A and Fig. 11B the same reference numerals as in the examples and embodiments described earlier are used to denote same components, and all have the functionality described above.

Fig. 11A shows a Hardware Security Module (HSM) in which only the security processor 206, the RNG 205, and the sensors 207 are covered by the encapsulation layer 301. In this HSM, the RNG 205 is connected to the security processor 206, rather than the FPGA 401. Note that, as in the other embodiments, the RNG 205 is within the encapsulation layer 301, as is the communication path by which the RNG 205 transmits random numbers to other components.

The device has in effect two regions with primary tamper protection. A first of these is applicable while the FPGA 401 (preferably a SoC FPGA) is powered. For example when the FPGA 401 is one of the specific choices discussed above, such as the Zynq^{®} Ultrascale+^{™} MPSoC, tamper protection is provided by the security operations of the FPGA 401 itself. That is, the FPGA 401 is configured to be sensitive, while it is powered, to attacks. Upon registering an attack, the FPGA will enter an alarm state, in which it may delete all sensitive data stored in the FPGA 401 (e.g. random numbers used to encrypt data stored in the RAM 209, and any unencrypted keys). Specifically, there may be erasure of all FPGA internal memories and a reset of all the FPGA processors. Also, upon the FPGA 401 losing power, all sensitive data stored in the FPGA 401 is lost, so although the primary tamper protection region is no longer effective, no security risk is created. In both the alarm state and the power-down situations, an ID stored within the FPGA is preferably not erased. This facilitates the return of the HSM to the manufacturer and, e.g. following a repair to damage to the HSM caused by the intruder, the resetting of the HMS for reuse in a configuration such as shown in Fig. 10.

A second region of primary tamper protection is defined by the encapsulation layer 301 and the tamper protection provided by the security processor 206, by interacting with the sensors 207 and the wire mesh 302. This tamper protection is active continually while sensitive material is stored within it. It is not reliant on a power source outside the encapsulation layer 301; instead the security processor 206 may contain an internal power source (not shown), or a power source separate from the security processor 206 may be provided encapsulated in the encapsulation layer 301. The sensitive material is deleted if the power source external to the encapsulation layer 301 fails (e.g. using the internal power source or the power source encapsulated in the encapsulation layer). The security processor 206 is designed to be very power efficient. If the security processor 206 detects an attack, or if its power source within the encapsulation layer 201 fails to provide power above a threshold, the security processor 206 enters an alarm state in which any sensitive material within it is erased.

Furthermore, either of the FPGA 401 and/or the security processor 206 may be configured, upon entering the alarm state, to transmit an alarm signal to the other of the FPGA 401 and the security processor 406, and upon receiving this alarm signal, the other of the FPGA 401 and the security processor 406 may itself enter the alarm state and consequently perform the actions explained above.

The FPGA 401 and the security processor 206 may be configured such that neither is individually "cryptographically complete"; in other words, information from both is required to perform certain security operations. One way this can be achieved is by splitting one or more keys used by the FPGA 401 into two "key parts", one of which is stored on the FPGA 401 and the other on the security processor 206. Neither key part is sufficient to perform a successful cryptographic operation. If the FPGA 401 is required to perform an operation (cryptographic algorithm) which employs a key which has been split into key parts, it requests from the security processor 206 the key part stored in the security processor 206 for that key. Having received the key part from the security processor 206, it performs the security operation using the complete key, and then erases the key part received from the security processor.

The key part stored in each of the FPGA 401 and the security processor 206 may be among the sensitive data which is erased upon the FPGA 401 or the security processor 206 respectively entering the alarm state.

Alternatively or additionally, the FPGA 401 and security processor 206 may have a different "shared secret", i.e. data which is required as part of a handshake operation of the FPGA 401 and the security processor 206, and the security processor 206 may delete its portion of the information when it enters the alarm state, e.g. is powered down. The handshake operation may be performed, e.g. at intervals, as a challenge/response operation. For example, the FPGA 401 may be configured to observe that, following a challenge message sent to the security processor 206 by the FPGA 401, that the security processor 206 issues a signal indicating that it is in the alarm state, and/or that the security processor fails to give the correct response, or takes a time to respond which is beyond a threshold.

Since the FPGA 401 erases all sensitive information when it is powered down, it does not have to be covered by the encapsulation layer 301 and/or the wire mesh 302. Thus, the FPGA 401 can be readily repaired or replaced, improving the reliability of the HSM device.

Furthermore, the non-volatile storage 208 is not covered by the encapsulation layer 301 and/or the wire mesh 302, so the non-volatile storage 208 can be readily repaired or replaced, improving the reliability of the HSM device.

As described in relation to Fig. 8A, data stored in the Random Access Memory (RAM) 209 and data communicated, in use, between the FPGA 401 and the Random Access Memory (RAM) 209 is encrypted, e.g. using a transient key. As a result, in this case there is no vulnerable data (i.e. data that can be intercepted and lead to a security vulnerability) stored on the RAM 209. Instead, the RAM 209 stores data in an encrypted form, which could only be decrypted by breaking the security boundary in which the FPGA 401 is located. Consequently, when the data is stored in the RAM it is not "in the open" in a form that can be readily understood by a malicious third party. As a result, the encapsulation layer 301 and/or wire mesh 302 are not required to cover the RAM 209. The RAM 209 can therefore be readily repaired or replaced, improving the reliability of the HSM device.

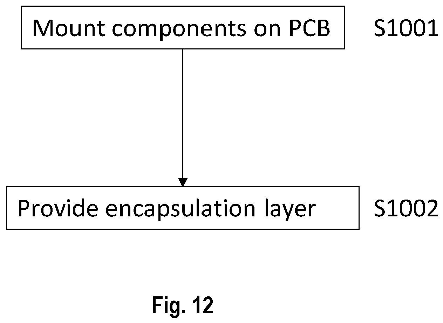

Although in Fig. 11A the wire mesh 302 is shown as being entirely within the encapsulation layer 301, it may alternatively extend beyond it, e.g. covering any or all the components of the HSM shown in Fig. 2. In this case, the wire mesh 302 may be provided as a knitted mesh set in epoxy. Fig. 12 shows a method of manufacturing a HSM device. The method may be used to manufacture the device shown in Fig. 7, Fig. 8, Fig. 9 or Fig. 10 or Fig. 11 for example.

In S1001, the hardware components are mounted onto the PCB. In this step, the non-volatile storage component(s), the RAM, the sensors, the security processor, the FPGA, the RNG, the input/output connector and the power/reset component are each mounted on the PCB.

In S1002, the encapsulation layer is provided. In this step, an epoxy resin (such as the specific epoxy resins discussed earlier) is provided over all of the components which are to be covered by the encapsulation layer. For example, the epoxy resin is provided over the FPGA, the security processor and the sensors. The epoxy resin is then cured in place.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein. In particular, the various features of components of the examples described above with reference to Figs. 1A to 7, apply to the same components when used in the embodiments of Figs. 8 to 11. For example, the configurations of the FPGA described in Figs. 5 to 6 may be used in the embodiments of Figs. 8 to 11. In a further example, the FPGA 401 of the embodiment of Figs. 8 to 11 may be replaced with a fixed processor, as described above with reference to Figs. 1A to 2B.

## Claims

1. A Hardware Security Module device comprising:
a tamper detection component;
a random access memory component;
a non-volatile memory component;
at least one processor communicatively coupled to the random access memory component, the tamper detection component, and the non-volatile storage component; and
a tamper resistant means encapsulating at least the tamper detection component, wherein at least one of the random access memory component and the non-volatile storage component are external to the tamper resistant means.

2. The device according to claim 1, wherein the random access memory is external to the tamper resistant means and configured to store data in an encrypted form, and in use, the at least one processor is configured to: encrypt data, transmit the encrypted data for storage in the Random Access Memory, and recover data retrieved from the Random Access Memory.

3. The device according to claim 1 or claim 2 in which the at least one processor is configured to detect a physical attack on the at least one processor, and upon detecting the attack to enter an alarm state in which the at least one processor erases data stored in the at least one processor.

4. The device according to any preceding claim, wherein the tamper detection component comprises a security processor encapsulated in the tamper resistant means and coupled to the at least one processor, the tamper detection component and the security processor the security processor being configured to cooperate to perform cryptographic algorithms on data, the tamper detection component further being configured to determine whether at least one alarm criterion is met, and upon determining that the at least one alarm criterion is met to enter an alarm state.

5. The device according to claim 4 in which, upon the security processor entering the alarm state, the security processor is configured to erase data stored within the security processor.

6. The device according to claim 4 or 5, when dependent on claim 3, in which, upon the security processor entering the alarm state, the security processor is configured to transmit a message to the at least one processor to cause the at least one processor to enter the alarm state.

7. The device according to any of claims 4 to 6 in which the tamper detection component further comprises at least one sensor communicatively coupled to the security processor, wherein the security processor is configured to identify, based on a reading from the sensor, that the security of the device has been compromised, and to enter the alarm state upon the identification.

8. The device according to any of claims 4 to 7, wherein the at least one sensor comprises a wire mesh embedded in the tamper resistant means, and the security processor is configured to identify that the security of the device has been compromised in response to detecting a change in electrical properties of the wire mesh, and to enter the alarm state upon the identification.

9. The device according to any preceding claim, wherein the at least one processor comprises a Field Programmable Gate Array component, FPGA.

10. The device according to claim 9, wherein the non-volatile storage component stores a program file and a bit file, and wherein in use, the FPGA is configured to:
load the program file and the bit file from the non-volatile storage component;
configure a section of programmable logic in the FPGA according to the bit file; and
execute the program file using the configured section of programmable logic.

11. The device according to any claim 10, wherein the bit file comprises information for implementing a cryptographic function in the section of programmable logic in the FPGA.

12. The device according to claim 10 or claim 11, wherein the non-volatile storage is configured to store encrypted keys, and wherein, in use, the FPGA is further configured to load the encrypted keys from the non-volatile storage, recover the one or more keys using a first cryptographic key, and to employ the recovered key to execute the program file.

13. The device according to any preceding claim in which, in use, the at least one processor and the tamper detection component are configured to store different respective subsets of a security key, and the at least one processor is configured, when a cryptographic operation is to be performed using the security key, to obtain from the tamper detection component the subset of the security key stored by the tamper detection component, and to perform the cryptographic operation using the security key.

14. The device according to any preceding claim, wherein the tamper resistant means comprises an encapsulation layer, such as an encapsulated layer provided as an epoxy layer.

15. The device according to any preceding claim, wherein:
the tamper resistant means encapsulates at least part of the at least one processor, the tamper detection component, and one or more connections between the at least one processor and the tamper detection component;
at least part of the at least one processor is external to the tamper resistant means, and the tamper resistant means encapsulates the tamper detection component;
the device further includes a random number generator component, which is optionally encapsulated by the tamper resistant means; and/or
wherein the random access memory, the non-volatile storage and the at least one processor are each implemented as discrete, individually-packaged, components.
